# EUROPEAN PATENT SPECIFICATION

(11) **EP 4 614 436 B1**
(45) Date of publication and mention of the grant of the patent: **02.09.2026**
(21) Application number: 23903759.1
(22) Date of filing: 07.11.2023
(51) Int. Cl.: G06T 7/00, G06T 7/11, G01N 21/88, G06K 19/06, G06V 10/25, G06V 10/82

(54) **ELECTRONIC DEVICE AND METHOD FOR DETERMINING INSPECTION AREA OF MANUFACTURED PRODUCT**
ELEKTRONISCHE VORRICHTUNG UND VERFAHREN ZUR BESTIMMUNG DES PRÜFBEREICHS EINES HERGESTELLTEN PRODUKTS
DISPOSITIF ÉLECTRONIQUE ET PROCÉDÉ DE DÉTERMINATION DE ZONE D'INSPECTION DE PRODUIT FABRIQUÉ

(30) Priority: 12.12.2022 KR 20220173048
(43) Date of publication of application: 10.09.2025
(73) Proprietor: Samsung Electronics Co., Ltd., Suwon-si, Gyeonggi-do 16677 (KR)
(72) Inventor: LEE, Kihyun, Suwon-si, Gyeonggi-do 16677 (KR)
(74) Representative: Appleyard Lees IP LLP
(86) International application number: PCT/KR2023/017739
(87) International publication number: WO 2024/128556

(56) References cited:
- WO-A1-2022/065621
- JP-A- 2021 021 670
- JP-A- 2021 053 819
- KR-A- 20190 088 761
- KR-A- 20200 139 948
- KR-A- 20210 031 569
- KR-B1- 102 378 186

## Description

### Technical Field

Embodiments disclosed herein relate to a device for determining an inspection area of a manufactured product in a smart factory, and a method of determining an inspection area by using the same.

### Background Art

Smart factories are intelligent production plants that apply information and communication technology to production processes in various fields, such as design, development, manufacturing, or distribution. Smart factories are futuristic factories that collect process data in real time through the Internet of Things, and analyze the data to autonomously control their operations.

In establishing a smart factory, it is necessary to classify produced product models and perform inspections to determine whether production or assembly of the produced products has been accurately performed. In particular, as product life cycles have shortened and consumer demands have diversified, leading to an increase in customized production, product models have become more diverse, and accordingly, methods of performing inspections by using machine learning have been developed to perform a customized inspection for each model.

Background disclosures are provided in patent publications KR102378186B1 and WO2022065621A1

### Disclosure of Invention

### Solution to Problem

According to an embodiment, an electronic device as set out in accompanying claim 1.

According to an embodiment, a computer-implemented method is provided as set out in accompanying claim 11.

As a technical unit for achieving the above-described technical objectives, a non-transitory computer-readable medium is provided, as set out in accompanying claim 15.

### Brief Description of Drawings

In order to more fully understand the drawings referenced herein, a brief description of each drawing is provided.
FIG. 1 is a block diagram illustrating a configuration of an electronic device according to an embodiment of the disclosure.
FIG. 2 is an exemplary block diagram illustrating functions of the electronic device illustrated in FIG. 1.
FIG. 3 illustrates inspection areas detected by an electronic device according to an embodiment.
FIG. 4 illustrates barcodes and a Quick Response (QR) code recognized by an electronic device, according to an embodiment.
FIG. 5 illustrates inspection areas and inspection items, which are detected by an electronic device, according to an embodiment.
FIG. 6 illustrates a method, performed by an electronic device, of inspecting harness fastening, according to an embodiment.
FIG. 7 illustrates a method, performed by an electronic device, of inspecting the presence or absence of a light-emitting diode (LED), according to an embodiment.
FIG. 8A illustrates a method, performed by an electronic device, of removing an inspection item, according to an embodiment.
FIG. 8B Illustrates a method, performed by an electronic device, of adding an inspection item, according to an embodiment.
FIG. 9 is a flowchart of a method, performed by an electronic device, of determining inspection items, according to an embodiment.

### Mode for the Invention

Hereinafter, embodiments of the present disclosure will be described in detail with reference to the accompanying drawings for those of skill in the art to be able to implement the embodiments without any difficulty. The present disclosure may, however, be embodied in many different forms and should not be construed as being limited to embodiments set forth herein. In addition, in order to clearly describe the present disclosure, portions that are not relevant to the description of the present disclosure are omitted, and similar reference numerals are assigned to similar elements throughout the specification.

Although the terms used herein for describing embodiments of the present disclosure are selected from among common terms that are currently widely used in consideration of their function in the present disclosure, the terms may be different according to an intention of those of ordinary skill in the art, a precedent, or the advent of new technology. Also, in particular cases, the terms are discretionally selected by the applicant of the present disclosure, in which case, the meaning of those terms will be described in detail in the corresponding embodiment. Therefore, the terms used herein are not merely designations of the terms, but the terms are defined based on the meaning of the terms and content throughout the present disclosure.

The singular expression may also include the plural meaning as long as it is not inconsistent with the context. All the terms used herein, including technical and scientific terms, may have the same meanings as those generally understood by those of skill in the art related to the present specification.

In addition, as used herein, the terms such as "...er (or)", "... unit", "... module", etc., denote a unit that performs at least one function or operation, which may be implemented as hardware or software or a combination thereof.

Throughout the specification, when a part is referred to as being "connected to" another part, it may mean that the part is "directly connected to" or "physically connected to" the other part, or is "electrically connected to" the other part through an intervening element. In the present disclosure, the terms "transmit", "receive", and "communicate", as well as derivatives thereof, encompass both direct and indirect communication. In addition, when a part is referred to as "including" or "comprising" a component, it means that the part may additionally include or comprise other components rather than excluding other components as long as there is no particular opposing recitation.

Throughout the present disclosure, the expression "or" is inclusive and not exclusive, as long as there is no particular opposing recitation. Thus, the expression "A or B" may refer to "A, B, or both" as long as it is not inconsistent with the context. In the present disclosure, the phrase "at least one of", when used with a list of items, means that different combinations of one or more of the listed items may be used, and only one item in the list may be needed. For example, "at least one of A, B, and C" may include any of the following combinations: "A", "B", "C", "A and B", "A and C", "B and C", or "A, B, and C".

The term "controller" may refer to any device or system that controls at least one operation, or part thereof. A controller may be implemented in hardware, a combination of hardware and software, or firmware. The functionality associated with any particular controller may be centralized or distributed, whether locally or remotely.

Various embodiments of the present disclosure to be described below may be implemented or supported by one or more computer programs, which may be produced from computer-readable program code and stored in a computer-readable medium. In the present disclosure, the terms "application" and "program" refer to one or more computer programs, software components, instruction sets, procedures, functions, objects, classes, instances, relevant data, which are suitable for an implementation in computer-readable program code, or a part thereof. The term "computer-readable program code" may include various types of computer code including source code, object code, and executable code. The term "computer-readable medium" may include various types of media that is accessible by a computer, such as read-only memory (ROM), random-access memory (RAM), a hard disk drive (HDD), a compact disc (CD), a digital video disc (DVD), or various types of memory.

In addition, the computer-readable storage medium may be provided in the form of a non-transitory storage medium. Here, the term 'non-transitory storage medium' refers to a tangible device, and may exclude wired, wireless, optical, or other communication links that transmit temporary electrical or other signals. In addition, the term 'non-transitory storage medium' does not distinguish between a case in which data is stored in a storage medium semi-permanently and a case in which data is stored temporarily. For example, the non-transitory storage medium may include a buffer in which data is temporarily stored. The computer-readable medium may be any available medium that is accessible by a computer, and may include a volatile or non-volatile medium and a removable or non-removable medium. The computer-readable media includes media in which data may be permanently stored and media in which data may be stored and overwritten later, such as a rewritable optical disc or an erasable memory device.

According to an embodiment, methods according to various embodiments disclosed herein may be included in a computer program product and then provided. The computer program product may be traded as commodities between sellers and buyers. The computer program product may be distributed in the form of a machine-readable storage medium (e.g., a CD-ROM), or be distributed (e.g., downloaded or uploaded) online through an application store (e.g., PlayStore^{™}), or between two user devices (e.g., smart phones) directly. In a case of online distribution, at least a portion of the computer program product (e.g., a downloadable app) may be temporarily stored in a machine-readable storage medium such as a manufacturer's server, an application store's server, or a memory of a relay server.

Definitions of other particular words and phrases may be provided throughout the present disclosure. Those of skill in the art to which the present disclosure pertains would understand that in many cases, such definitions apply to prior as well as future uses of such defined words and phrases.

In the present specification, each component described hereinafter may additionally perform some or all of functions performed by another component, in addition to main functions of itself, and some of the main functions of each component may be performed entirely by another component.

In the present specification, the term 'machine learning' is a field of artificial intelligence and refers to an algorithm for learning and executing an action that is not empirically defined in code, based on data.

In the present disclosure, the term 'model' may refer to a group of products of the same kind manufactured through the same manufacturing process in a factory to have the same appearance and performance. In addition, the term 'model' refers to a group of products of the same kind, and thus, products of the same model may include the same markings to indicate that they belong to the same product group. For example, the same markings included in products of the same model may be a serial number, a barcode, a Quick Response (QR) code, and the like.

In the present specification, the term 'image' may refer to an image or picture captured by a capturing device. The term "image" may also refer to an image file or image data.

In the present specification, the term 'video' may refer to a video captured by a capturing device, or footage created by concatenating frames, rather than a still image. The term "video" may also refer to a video file or video data.

To inspect whether a manufactured product has been accurately manufactured in a smart factory, technologies have been developed to determine an inspection area by using techniques such as artificial neural network or vision recognition, and to perform an inspection on the determined inspection area.

Because it is difficult for a determined inspection area to exactly match an inspection area that needs to be actually inspected, there is a possibility that an incorrect inspection area may be added to the determined inspection area, or that an inspection area that needs to be inspected may be omitted.

As the life cycle of manufactured products have shortened, and consumer demands have diversified, customized individual production of manufactured products has increased. In smart factories, with the trend of high-mix, low-volume production, manufactured product models have diversified, and optimized inspections are required for each model.

Therefore, compared to the related art in which a user manually generates and determines an inspection area for each model, there is a need for technology that determines an inspection area and performs an inspection in a smart factory by using recently developed techniques such as machine learning or vision technology.

Hereinafter, an electronic device for receiving input data and determining an inspection area for each manufactured product model by using an artificial neural network will be described.

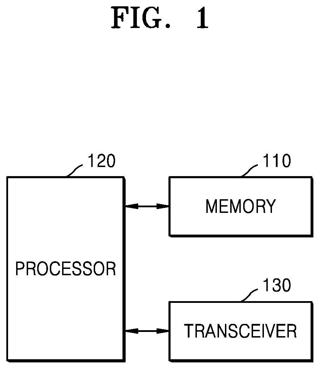

FIG. 1 is a block diagram illustrating a configuration of an electronic device according to an embodiment of the disclosure.

Referring to FIG. 1, an electronic device according to an embodiment of the disclosure may include a memory 110, a processor 120, and a transceiver 130. According to various embodiments, the components of the electronic device are not limited to those illustrated in FIG. 1, and other components than those illustrated in FIG. 1 may be further included, or some of the components illustrated in FIG. 1 may be omitted.

For example, the electronic device may further include an output unit capable of outputting a determined final inspection area and inspection items through text, sound, a display, or the like.

In addition, an operation of the processor 120 may be implemented as a software module stored in the memory 110. For example, the software module may be stored in the memory 110 and may operate when executed by the processor 120.

The memory 110 may be electrically connected to the processor 120, and may store instructions or data associated with operations of the components included in the electronic device. According to various embodiments, the memory 110 may store base station data information obtained by using the transceiver 130, representative data generated by using base station data, or instructions for operations of a base station model.

According to an embodiment, in a case in which a pre-trained artificial neural network capable of outputting an inspection area, and at least some of conceptually distinct modules for functions of the electronic device are implemented as software executable by the processor 120, the memory 110 may store instructions for executing such software modules.

The processor 120 may be electrically connected to the components included in the electronic device to perform computations or data processing for control and/or communications of the components included in the electronic device. According to an embodiment, the processor 120 may load, into the memory 110, instructions or data received from at least one of other components, process the instructions or data, and store resulting data in the memory 110.

In addition, FIG. 1 illustrates that the processor 120 operates as one processor 120 for convenience of description, but at least one conceptually distinct function for functions of a learning model and the electronic device may be implemented with a plurality of processors. In this case, the processor 120 does not operate as one processor 120, but a plurality of processors may be implemented as separate hardware units to perform respective operations. However, the present disclosure is not limited thereto.

The transceiver 130 may support establishment of a wired or wireless communication channel between the electronic device and another external electronic device, and communication through the established communication channel. According to an embodiment, through wired or wireless communication, the transceiver 130 may receive data from another external electronic device or may receive inspection items for a model to be inspected, from a server storing the inspection items.

In addition, the transceiver 130 may receive input data for determining an inspection area for a manufactured product. Here, the input data may be any one of an image, a video, or a hyperspectral image including a part or the entirety of the manufactured product. Here, according to an embodiment, in a case in which the input data is a hyperspectral image, an inspection may be performed based on a difference between a reference image that is set within a hyperspectral image, and an image within the currently input hyperspectral image.

In a case in which the input data obtained by the transceiver 130 is a video, a particular frame may be selected from among a plurality of frames of the obtained video, and an inspection area may be determined for the selected frame. For example, the frame selected by the electronic device may be the frame with the highest sharpness among all the frames or the last frame of the video. The frame selected by the electronic device is not limited to these examples.

Hereinafter, for convenience of description, it is assumed that the input data is an image.

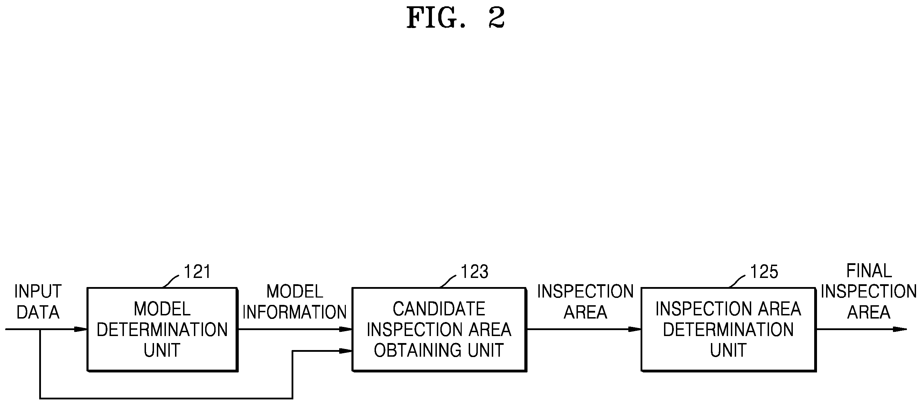

FIG. 2 is an exemplary block diagram illustrating functions of the electronic device illustrated in FIG. 1.

Referring to FIG. 2, the electronic device may include a model determination unit 121, a candidate inspection area obtaining unit 123, and an inspection area determination unit 125. However, the functions included in the electronic device are not limited thereto. The electronic device may omit some components, and may additionally include components that perform other functions. For example, the electronic device according to an embodiment may further include a data alignment unit capable of aligning input data.

In an embodiment of the present disclosure, the model determination unit 121 may identify a model of a manufactured product included in obtained input data by using the input data. In determining inspection areas and inspection items for each manufactured product model in a smart factory, using model information about a manufactured product enables more accurate determination of inspection areas and inspection items than using only an image.

The model determination unit 121 is arranged to recognize an inspection object present in input data, and identify a model of a manufactured product from the recognized object. To identify the model of the manufactured product, the model determination unit 121 may use vision recognition technology, an artificial neural network, or the like, which uses input data as input.

Functions associated with artificial intelligence according to the present disclosure are performed by a processor and a memory. The processor may include one or more processors. In this case, the one or more processors may be a general-purpose processor, such as a central processing unit (CPU), an application processor (AP), or a digital signal processor (DSP), a dedicated graphics processor such as a graphics processing unit (GPU) or a vision processing unit (VPU), or a dedicated artificial intelligence processor such as a neural processing unit (NPU). The one or more processors perform control to process input data according to predefined operation rules or an artificial intelligence model stored in the memory. Alternatively, in a case in which the one or more processors are dedicated artificial intelligence processors, the dedicated artificial intelligence processor may be designed with a hardware structure specialized for processing a particular artificial intelligence model.

The predefined operation rules or artificial intelligence model is generated via a training process. Here, being generated via a training process may mean that predefined operation rules or artificial intelligence model set to perform desired characteristics (or purposes), is generated by training a basic artificial intelligence model by using a learning algorithm that utilizes a large amount of training data. The training process may be performed by a device itself on which artificial intelligence according to the present disclosure is performed, or by a separate server and/or system. Examples of learning algorithms may include, for example, supervised learning, unsupervised learning, semi-supervised learning, and reinforcement learning, but are not limited thereto.

The artificial intelligence model may include a plurality of neural network layers. Each of the neural network layers has a plurality of weight values, and performs a neural network arithmetic operation via an arithmetic operation between an arithmetic operation result of a previous layer and the plurality of weight values. The plurality of weight values in each of the plurality of neural network layers may be optimized as a result of training the artificial intelligence model. For example, the plurality of weight values may be updated to reduce or minimize a loss or cost value obtained by the artificial intelligence model during a training process. The artificial neural network may include, for example, a deep neural network (DNN) and may include, for example, a convolutional neural network (CNN), a deep neural network (DNN), a recurrent neural network (RNN), a restricted Boltzmann machine (RBM), a deep belief network (DBN), a bidirectional recurrent deep neural network (BRDNN), a deep Q-network, or the like, but is not limited thereto.

In a method, performed by an electronic device, of obtaining candidate inspection areas, according to the present disclosure, output data that is a result of recognizing an image or an inspection target within an image may be obtained by using input data as input data for an artificial neural network. The artificial intelligence model may be generated via a training process. Here, being generated via a training process may mean that predefined operation rules or artificial intelligence model set to perform desired characteristics (or purposes), is generated by training a basic artificial intelligence model by using a learning algorithm that utilizes a large amount of training data. The artificial intelligence model may include a plurality of neural network layers. Each of the neural network layers has a plurality of weight values, and performs a neural network arithmetic operation via an arithmetic operation between an arithmetic operation result of a previous layer and the plurality of weight values.

Visual understanding is a technology for recognizing and processing objects as in human vision and includes object recognition, object tracking, image retrieval, human recognition, scene recognition, three-dimensional (3D) reconstruction/localization, image enhancement, etc.

According to an embodiment, the model determination unit 121 may identify a model of a manufactured product by identifying identification information included in the input data. For example, the model determination unit 121 may identify, as identification information, information such as a barcode or a QR code, and identify the model of the manufactured product by using the identified information. Vision technology, an artificial neural network, or the like may be used on the input data to identify information such as a barcode or a QR code.

According to an embodiment, by using the identified model, the model determination unit 121 may obtain an inspection target and an inspection type for the identified model. The model determination unit 121 may transmit information about the identified model to an external server or a production management system, such as a manufacturing execution system (MES), by using the transceiver 130 of FIG. 1, so as to obtain an inspection target and an inspection type for the identified model, and receive model information including an inspection target and an inspection type for the identified model, from the external server or production management system.

According to an embodiment, by using the identified model to obtain an inspection area and an inspection type of the identified model, the model determination unit 121 may obtain model information including an inspection target and an inspection type of the identified model that are stored in the memory 110 of FIG. 1.

The method, performed by the model determination unit 121, of obtaining an inspection area and an inspection type of an identified model by using information about the identified model is not limited thereto.

According to an embodiment, the candidate inspection area obtaining unit 123 may input the obtained input data and model information to a pre-trained artificial neural network, to output one or more candidate inspection areas.

According to an embodiment, the candidate inspection area obtaining unit 123 may calculate a rotation angle between a plurality of pieces of input data, and align them by the calculated rotation angle.

In more detail, based on a particular piece of input data from among the plurality of pieces of input data, the candidate inspection area obtaining unit 123 may rotationally other pieces of input data than the particular piece of input data. For example, by using, as reference input data, the first piece of input data of the plurality of pieces of input data, the candidate inspection area obtaining unit 123 may rotationally align the other pieces of input data. In a case in which input data is an image obtained by photographing a manufactured product that is tilted, the candidate inspection area obtaining unit 123 may rotate the image to obtain a more correctly aligned image of the manufactured product compared to other images.

Various known methods may be used for the rotational alignment performed by the candidate inspection area obtaining unit 123. For example, the candidate inspection area obtaining unit 123 may select a plurality of reference points for input data that is used as a reference, and calculate positions or a rotation angle by comparing the selected reference points with reference points of input data different from the input data used as the reference. By performing rotational alignment by the difference in the calculated positions and by the calculated rotation angle, a plurality of pieces of input data having the same positional relationship as the reference input data may be generated.

In addition, according to an embodiment, the candidate inspection area obtaining unit 123 may select, as a reference outline, an outline of an object included in the reference input data, and compare the reference outline with an outline of an object that corresponds to the object in the reference input data and is included in input data different from the reference input data, so as to perform translational and rotational alignment.

The method, performed by the candidate inspection area obtaining unit 123, of performing rotational and translational alignment based on reference input data is not limited thereto.

According to an embodiment, the inspection area determination unit 125 may perform an inspection on one or more candidate inspection areas obtained by the candidate inspection area obtaining unit 123, and determine a final inspection area by using a result of performing the inspection.

According to an embodiment, the types of inspections performed by the inspection area determination unit 125 may include fastening inspections, shaping inspections, appearance inspections, and the like. Here, fastening inspections may refer to inspecting whether a corresponding cable, such as a flat flexible cable (FFC), a harness, or an amp cable, is properly fastened to a manufactured product. In addition, fastening inspections may include inspections of whether a connector is fastened, inspections of the fastening direction of a connector, inspections of the fastening depth of a connector, and the like.

In addition, shaping inspections may refer to checking whether a shape for assembly is formed at the correct position during a manufacturing process. For example, shaping inspections of mechanisms for assembling a television (TV) may include inspections of a wire area for assembling a back cover to a sash, and a wall mount area that is a point for fixing the TV to a wall.

Appearance inspections may refer to inspecting whether there is a flaw, such as a scratch, on a manufactured product, when performing shaping of plastic, metal, or the like.

At least one inspection type may be matched to an inspection area, and this matching may be preset by a user, or may be performed by using information stored in a production management system. The method of matching an inspection area and an inspection type is not limited thereto.

According to an embodiment, an artificial neural network that is different from the artificial neural network configured to determine an inspection area may be used by the inspection area determination unit 125 to perform an inspection. The artificial neural network for performing an inspection may be pre-trained by using image data about inspection targets and inspection types for training.

According to an embodiment, the inspection area determination unit 125 may perform an inspection on each of a plurality of candidate inspection areas, and determine a final inspection area by using inspection results each including 'inspection successful', 'inspection failed', or 'inspection infeasible'. Here, 'inspection successful' may refer to performing an inspection on a candidate inspection area and obtaining an inspection result that satisfies a certain inspection criterion. 'Inspection failed' may refer to performing an inspection on a candidate inspection area and obtaining an inspection result that does not satisfy a certain inspection criterion. In addition, 'inspection infeasible' may refer to an inspection result indicating that an inspection cannot be performed on a candidate inspection area because an inspection target cannot be recognized in a corresponding candidate inspection area.

In addition, according to an embodiment, while performing inspections on candidate inspection areas of a plurality of pieces of input data, the inspection area determination unit 125 may remove, based on an inspection result, an inspection area from the candidate inspection areas, and may add an additional inspection area that is obtained from new input data, to the candidate inspection areas.

According to an embodiment, when the inspection area determination unit 125 adds an inspection area, an inspection of the added inspection area may be performed in parallel or sequentially with respect to an inspection of an existing inspection area.

When the inspection area determination unit 125 performs inspections of inspection areas in parallel, multiple inspections, including inspections of whether an object is present, numerical inspections, shape inspections, and the like, may be performed on one inspection area.

By adding or removing inspection areas, the inspection area determination unit 125 may exclude an inspection area that is incorrectly generated by the candidate inspection area obtaining unit, or may add a missing inspection area, thereby finally determining the inspection areas for each model. Therefore, various effects may be obtained, including the effect that a plurality of final inspection areas to be inspected may be accurately determined.

In addition, when a plurality of candidate inspection areas satisfy a certain criterion, the inspection area determination unit 125 may determine those candidate inspection areas as the final inspection areas for the corresponding model.

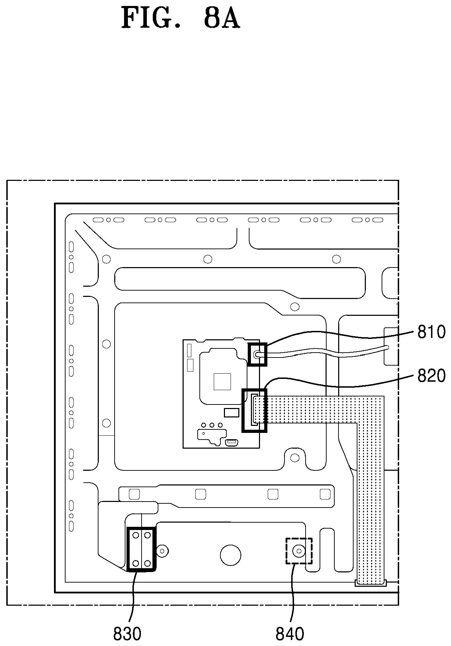

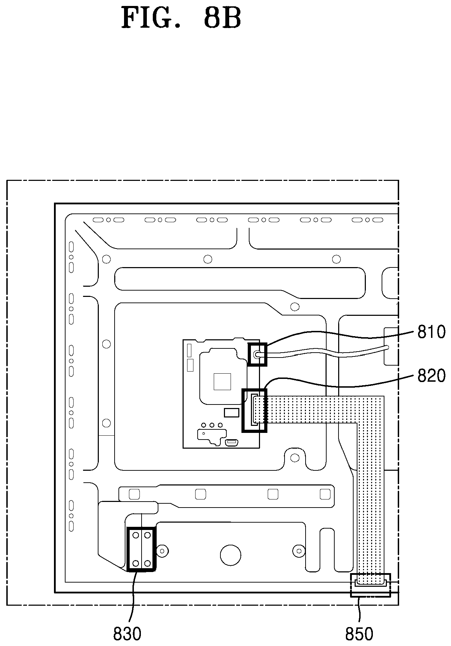

Detailed methods, performed by the inspection area determination unit 125, of removing an inspection area from candidate inspection areas or adding an additional inspection area to candidate inspection areas, and of determining a final inspection area will be described below with reference to FIGS. 8A and 8B.

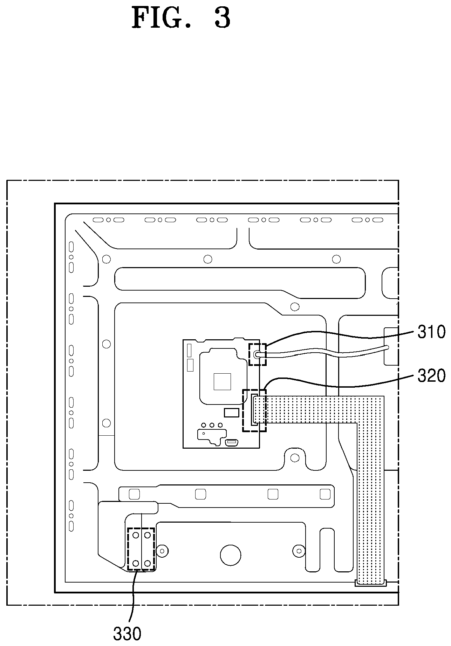

FIG. 3 illustrates inspection areas of input data detected by an electronic device, according to an embodiment.

Referring to FIGS. 2 and 3, input data received by the electronic device may be an image including a portion of a manufactured product, as illustrated in FIG. 3. In a case in which the input data is an image, the input data may include a wire area 310, an FFC area 320, and a stud area 330, which require inspections for the manufactured product model.

The candidate inspection area obtaining unit 123 of FIG. 2 may output the wire area 310, the FFC area 320, and the stud area 330 by using the obtained input data as input to a pre-trained artificial neural network. The candidate inspection area obtaining unit 123 of FIG. 2 may output candidate inspection areas for inspection targets, including wires, FFCs, and studs, on which inspections are to be performed.

Here, the pre-trained artificial neural network may have been trained based on supervised learning, semi-supervised learning, or unsupervised learning. For example, in a case in which the artificial neural network is trained based on supervised learning, the artificial neural network may be trained by using a plurality of pieces of training input data about images of a model, and a plurality of pieces of ground-truth data corresponding thereto.

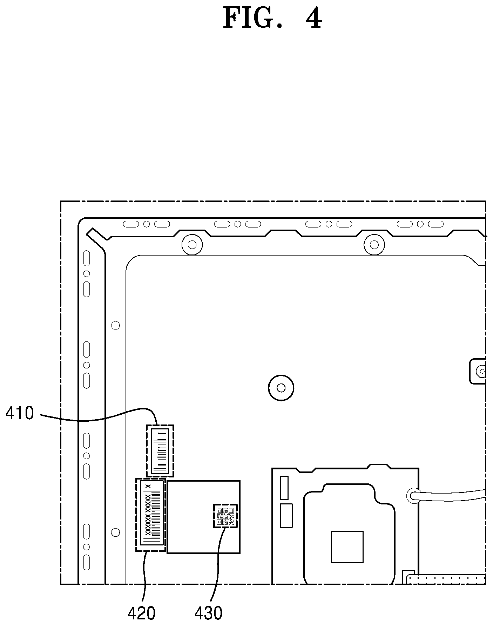

The candidate inspection area obtaining unit 123 of FIG. 2 may further obtain model information for generating candidate inspection areas. To obtain model information, QR codes and barcodes on a manufactured product may be recognized by using vision technology and deep learning technology. In a case in which multiple types of models are produced on the same process line, model information may be necessary for distinguishing between the multiple types of models for generating and inspecting inspection areas. Model information about a manufactured product may be obtained through vision, barcode reader information, or a production management system such as an MES. Hereinafter, a method of identifying a model by using a barcode and a QR code recognized by an electronic device will be described with reference to FIG. 4.

FIG. 4 illustrates barcodes and a QR code recognized by an electronic device, according to an embodiment.

Referring to FIG. 4, input data may include barcodes 410 and 420, and a QR code 430, which may be used to identifying the model of a manufactured product. To determine inspection areas of the manufactured product, the electronic device may identify the model of the manufactured product by using the barcodes 410 and 420, and the QR code 430.

The barcodes 410 and 420, and the QR code 430 may be displayed on the manufactured product in the form of a sticker or in printed form as an indication for identifying the model of the manufactured product.

The model determination unit 121 of FIG. 2 may identify the barcodes 410 and 420, and the QR code 430 by using a pre-trained artificial neural network, vision technology, or the like. In addition, according to an embodiment, the model determination unit 121 may obtain model information about the manufactured product by using the identified barcodes 410 and 420, and QR code 430. The model information about the manufactured product may include inspection areas and inspection types for the model. The method, performed by an electronic device, of obtaining model information about a manufactured product is as described above.

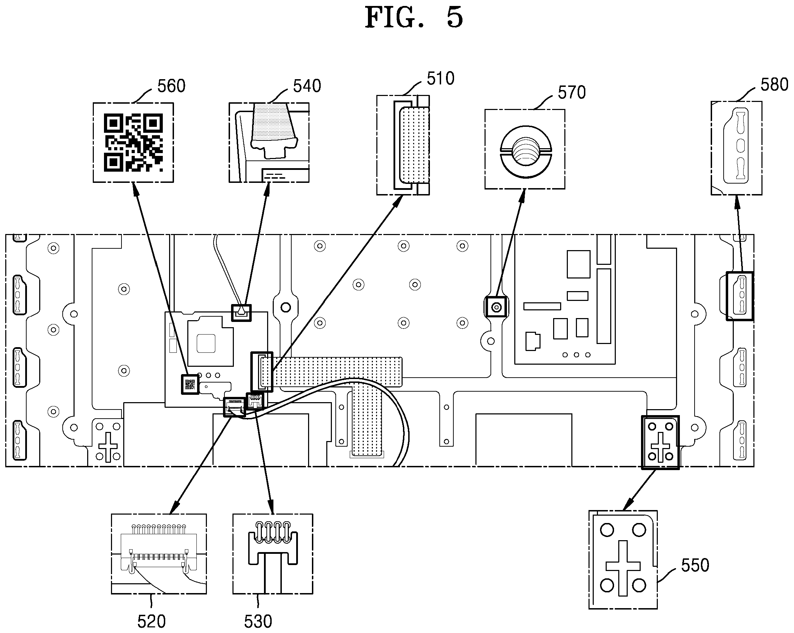

FIG. 5 illustrates inspection areas and a QR code area detected by an electronic device, according to an embodiment.

Referring to FIG. 5, input data may include an FFC area 510, a harness area 520, an amp connector area 530, a Wi-Fi connector area 540, a stud area 550, a QR code 560, a wall mount area 570, and a wire area 580, as areas for performing inspections.

Here, the FFC area 510, the harness area 520, the amp connector area 530, and the Wi-Fi connector area 540 may be areas on which fastening inspections with manufactured products such as PCBs are to be performed. In addition, the stud area 550, the wall mount area 570, and the wire area 580 may be areas on which shaping inspections are to be performed, and the QR code 560 may include information for identifying the model of the input data.

When each candidate inspection area is detected by the electronic device, at least one inspection matched to the candidate inspection area may be performed on the candidate inspection area. For example, fastening inspections may be performed on the FFC area 510, and at least one of an inspection of whether a connector has been fastened, an inspection of the fastening direction of a connector, and an inspection of the fastening depth of a connector may be performed in the fastening inspections.

For example, when the candidate inspection area obtaining unit 123 of FIG. 2 detects the wall mount area 570 as an output of the artificial neural network, the inspection area determination unit 125 may add the wall mount area 570 to the candidate inspection areas.

Here, when the inspection area determination unit 125 performs a shaping inspection on the wall mount area 570, inspection items including the shaping inspection may be added to the corresponding candidate inspection area. In addition, when the inspection area determination unit 125 performs an inspection of the presence or absence of a wall mount, the inspection may also be added to the inspection items.

According to an embodiment, different inspections may be performed on the same inspection area, and the user may generate inspection items by setting what kind of inspection to perform on the inspection area, and the electronic device may determine inspection areas and inspection items by referring to information from a production management system, such as an MES, about which inspection items have detected many issues in the market, inspection information from process quality assurance (QA), or the like. The method of determining inspection items is not limited to thereto.

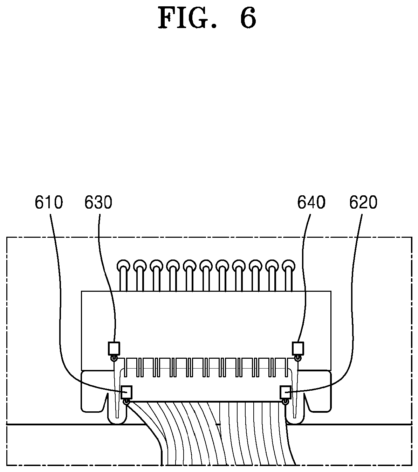

FIG. 6 illustrates a method, performed by an electronic device, of inspecting harness fastening, according to an embodiment.

Referring to FIG. 6, the inspection area determination unit 125 of FIG. 2 may recognize a plurality of inspection points 610, 620, 630, and 640, to perform a fastening inspection on a harness area. The plurality of inspection points may include four vertices to which harnesses are connected. In FIG. 6, the plurality of inspection points 610, 620, 630, and 640 include four selected points, but fewer or more points may be selected.

According to an embodiment, the inspection area determination unit 125 of FIG. 2 may store in advance the position of each point to perform a fastening inspection. The inspection area determination unit 125 may detect the positions of points in a harness area included in input data about a manufactured product, that respectively correspond to the stored points, and compare a pre-stored positional relationship with a positional relationship between the detected points, thereby performing a fastening inspection.

For example, when a distance difference between points, which is obtained by comparing the positional relationship between the plurality of inspection points 610, 620, 630, and 640, with the pre-stored positional relationship between a plurality of points, is less than or equal to a certain value, and a difference that is obtained by comparing angles between pre-stored points with angles that are calculated between three points among the plurality of inspection points 610, 620, 630, and 640, is less than or equal to a certain value, the inspection area determination unit 125 of FIG. 2 may determine that the fastening inspection has been successful.

Alternatively, when a distance difference between points, which is obtained by comparing the positional relationship between the plurality of inspection points 610, 620, 630, and 640, with the pre-stored positional relationship between a plurality of points, is greater than a certain value, and a difference that is obtained by comparing angles between pre-stored points with angles that are calculated between three points among the plurality of inspection points 610, 620, 630, and 640, is greater than a certain value, the inspection area determination unit 125 of FIG. 2 may determine that the fastening inspection has failed.

In addition, when the inspection area determination unit 125 of FIG. 2 fails to detect at least one point among the plurality of inspection points 610, 620, 630, and 640 that are detected in the input data, the inspection area determination unit 125 may determine that the inspection is infeasible on the corresponding inspection area.

The inspection area determination unit 125 of FIG. 2 may remove the corresponding inspection area from the candidate inspection areas, based on a determination of 'inspection successful', 'inspection failed', or 'inspection infeasible'.

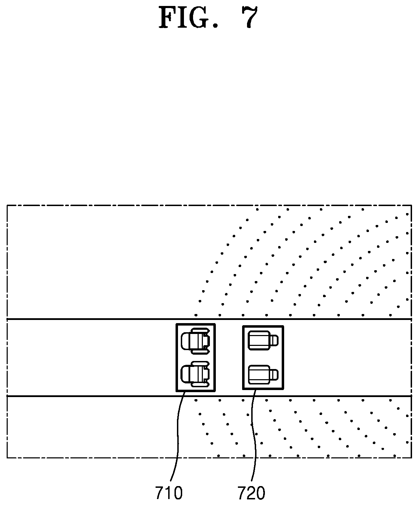

FIG. 7 illustrates a method, performed by an electronic device, of inspecting the presence or absence of a light-emitting diode (LED), according to an embodiment.

Referring to FIG. 7, in a case in which input data includes an LED area, the candidate inspection area obtaining unit 123 of FIG. 2 may detect the LED area, and the inspection area determination unit 125 may identify a first LED 710 and a second LED 720.

An inspection of components, such as LEDs, may be performed by determining whether the corresponding components are present in a manufactured product, and comparing positional relationships between the components.

According to an embodiment, the electronic device may store reference positions for the first LED 710 and the second LED 720 by using model information, and perform inspections for the input data to determine whether the first LED 710 and the second LED 720 are present, and whether a positional relationship between the first LED 710 and the second LED 720 is within a certain range with respect to a pre-stored positional relationship. In this case, when the first LED 710 or the second LED 720 cannot be detected, the inspection area determination unit 125 may determine that the inspection has failed or is infeasible.

Hereinafter, a method, performed by an electronic device according to an embodiment, of adding or removing an inspection area to or from candidate inspection areas so as to determine final inspection areas will be described.

FIGS. 8A and 8B illustrate a method, performed by an electronic device, of adding or removing an inspection area, according to an embodiment.

FIG. 8A illustrates a case in which the electronic device selects, as a plurality of candidate inspection areas, a wire area 810, a first FFC area 820, a stud area 830, and a wall mount area 840 by using input data. In this case, the inspection area determination unit 125 of FIG. 2 may perform each matched inspection on each area.

The inspection area determination unit 125 of FIG. 2 may perform inspections on the wire area 810, the first FFC area 820, the stud area 830, and the wall mount area 840 of a plurality of pieces of input data, and exclude the wall mount area 840 from the candidate inspection areas, based on inspection results. According to an embodiment, when the proportion of inspection results for each inspection area, which indicate determinations of inability to inspect, out of all inspection results is greater than or equal to a preset value, the electronic device may exclude the corresponding inspection area from the candidate inspection areas.

For example, it is assumed that the preset proportion is 20 %, and results of performing inspections on each of the wire area 810, the first FFC area 820, the stud area 830, and the wall mount area 840 of 20 pieces of input data indicate that the wire area 810 has 0 % of determinations of inability to inspect, the first FFC area 820 has 5 % of determinations of inability to inspect, the stud area 830 has 10 % of determinations of inability to inspect, and the wall mount area 840 has 25 % of determinations of inability to inspect. In this case, the electronic device may determine that the wall mount area 840 is an incorrectly added inspection area, and accordingly, exclude the wall mount area 840 from the candidate inspection areas.

Here, the electronic device may be configured to exclude the corresponding inspection area from the candidate inspection areas only when the corresponding inspection is performed on a preset number or more of pieces of input data, in order to exclude areas corresponding to inability to inspect from the candidate inspection areas.

For example, in a case in which the electronic device is configured to exclude a candidate inspection area be excluded from the candidate inspection areas only after performing the corresponding inspection on the corresponding candidate inspection area for six or more pieces of input data, the electronic device may not exclude the wall mount area 840 from the candidate inspection areas even when results of inspection of the wall mount area 840 for five pieces of input data indicate determination of inability to inspect. When an inspection result on the wall mount area 840 for the sixth piece of input data indicates a determination of inability to inspect, the electronic device may exclude the wall mount area 840 from the candidate inspection areas.

FIG. 8B illustrates a case in which the electronic device selects, as a plurality of candidate inspection areas, the wire area 810, the first FFC area 820, and the stud area 830 by using input data. After the plurality of candidate inspection areas are selected, the candidate inspection area obtaining unit 123 of FIG. 2 may obtain a second FFC area 850 as an additional inspection area by inputting additional input data. Subsequently, the inspection area determination unit 125 of FIG. 2 may add the second FFC area 850 to the candidate inspection areas, based on results of inspection of the second FFC area 850.

According to an embodiment, in order to add the second FFC area 850 to the candidate inspection areas, the electronic device may determine whether the second FFC area 850 is detected in a preset number or more of pieces of additional input data, and when the second FFC area 850 is detected, add the second FFC area 850 to the candidate inspection areas. For example, when the second FFC area 850 is detected in three or more pieces of additional input data, the second FFC area 850 may be added to the candidate inspection areas. According to an embodiment, the electronic device may add the second FFC area 850 to the candidate inspection areas only when the second FFC area 850 is detected consecutively in three or more pieces of additional input data. The method, performed by an electronic device, of adding a detected inspection area to candidate inspection areas is not limited thereto.

Hereinafter, a method, performed by the inspection area determination unit 125 of FIG. 2, of determining final inspection areas will be described.

It is assumed that 20 pieces of input data are required for the electronic device to determine final inspection areas, the number of pieces of additional input data required as a condition for adding an inspection area to the candidate inspection areas is three, the proportion of determinations of inability to inspect required as a condition for exclusion from the candidate inspection areas is 80 %, and the minimum number of pieces of input data required for excluding an inspection area is six.

When the wire area 810, the first FFC area 820, the stud area 830, and the wall mount area 840 of FIG. 8A are detected in first input data, the electronic device may select the wire area 810, the first FFC area 820, the stud area 830, and the wall mount area 840, as candidate inspection areas. When results of inspection of the wall mount area 840 for seventh input data to ninth input data indicate determinations of inability to inspect, the wall mount area 840 may be excluded from the candidate inspection areas.

When results of inspection of the wire area 810, the first FFC area 820, and the stud area 830 for the first input data to twentieth input data indicate determinations of 'inspection successful', those inspection areas may be fixed as candidate inspection areas, and no inspection may be performed on additional input data.

In addition, when the second FFC area 850 of FIG. 8B is detected in fifth input data to tenth input data, the second FFC area 850 may be added to the candidate inspection areas. When the electronic device performs inspections on the second FFC area 850 for eleventh input data to thirtieth input data and the inspection results indicate that the inspections are not determined as 'inspection successful' or 'inspection infeasible', the electronic device may determine the candidate inspection areas as final inspection areas. In other words, when the number of times that inspections on all candidate inspection areas are not determined as 'inspection successful' or 'inspection infeasible' is 20 or greater, the electronic device may determine the candidate inspection areas as final inspection areas.

According to an embodiment, the electronic device may determine the determined final inspection areas as manufacturing areas. A manufacturing area on which a manufacturing process for a model is performed in a smart factory may be the same area as a final inspection area determined by the electronic device. For example, because a process of detecting a plurality of points for the FFC area of FIG. 6 and performing an inspection may coincide with coupling points for connecting an FFC in a smart factory, the corresponding FFC area may be determined as a manufacturing area.

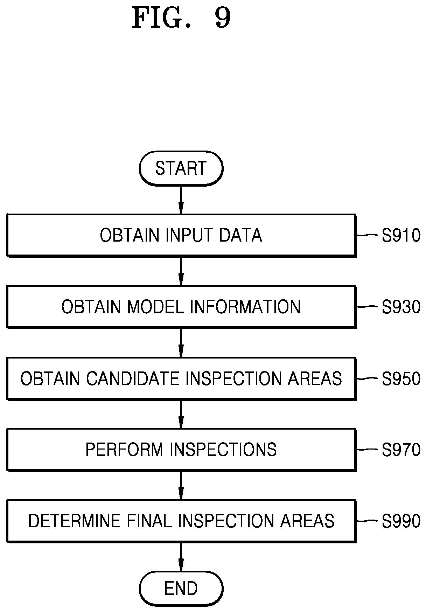

FIG. 9 is a flowchart of a method, performed by an electronic device, of determining inspection items, according to an embodiment.

Referring to FIG. 9, the electronic device may obtain a plurality of pieces of first input data corresponding to a plurality of manufactured products (S910).

Here, the input data may be any one of an image, a video, or a hyperspectral image including a part or the entirety of the manufactured product. Here, according to an embodiment, in a case in which the input data is a hyperspectral image, an inspection may be performed based on a difference between a reference image that is set within a hyperspectral image, and an image within the currently input hyperspectral image.

In a case in which the obtained input data is a video, a particular frame may be selected from among a plurality of frames of the obtained video, and an inspection area may be determined for the selected frame. For example, the frame selected by the electronic device may be the frame with the highest sharpness among all the frames or the last frame of the video. The frame selected by the electronic device is not limited to these examples.

In addition, the electronic device obtains model information about the plurality of manufactured products, based on the obtained plurality of pieces of first input data (S930). The electronic device recognizes the models of the plurality of manufactured products, based on the obtained plurality of pieces of first input data, and obtain model information.

To identify the models of the manufactured products, vision recognition technology, an artificial neural network, or the like, which uses input data as input, is used. In a method, performed by an electronic device, of obtaining candidate inspection areas, according to the present disclosure, output data that is a result of recognizing an image or an inspection target within an image may be obtained by using input data as input data for an artificial neural network.

Information such as barcodes or QR codes included in the input data may be additionally identified, and the models of the manufactured products may be identified by using the information. Vision technology, an artificial neural network, or the like may be used on the input data to identify information such as a barcode or a QR code. The method, performed by an electronic device, of identifying a barcode or a QR code included in input data is as described above.

According to an embodiment, by using the identified model, the electronic device may obtain inspection targets and inspection types for the identified models. To obtain the inspection targets and the inspection types for the identified models, the identified model information may be transmitted to an external server or a production management system such as an MES, and model information including the inspection targets and the inspection types for the identified models may be received from the external server or production management system.

According to an embodiment, the electronic device may input each of the plurality of pieces of first input data and the identified model information to a pre-trained artificial neural network that is pre-trained to, in response to a video or an image being input, output inspection areas, so as to generate at least one candidate inspection area for the corresponding first input data. (S950).

Here, the artificial neural network may have been trained based on any one of supervised learning, semi-supervised learning, or unsupervised learning. The detailed description thereof is as described above.

According to an embodiment, the electronic device may identify an inspection target in the at least one first candidate inspection area of each input data, and perform inspections (S970).

Here, the inspections performed by the electronic device may include fastening inspections, shaping inspections, appearance inspections, and the like. The descriptions of fastening inspections, shaping inspections, and appearance inspections are as described above.

According to an embodiment, the electronic device may determine final inspection areas from among the at least one first candidate inspection area of each input data, based on inspection results (S990).

Here, the inspection results may include 'inspection successful', 'inspection failed', and 'inspection infeasible', and the electronic device may determine the final inspection areas by using the inspection results. When the proportion of 'inspection infeasible', which mean that the inspection is infeasible because an inspection target is not detected, with respect to the number of inspections on the corresponding candidate inspection area is greater than or equal to a preset value, the electronic device may regard the candidate inspection area as an incorrectly added inspection area and exclude it from the candidate inspection areas.

In addition, according to an embodiment, when the electronic device detects an additional inspection area in additional input data, which is not included in the candidate inspection areas, the electronic device may add the inspection area to the candidate inspection areas.

A machine-readable storage medium may be provided in the form of a non-transitory storage medium. Here, the term 'non-transitory storage medium' refers to a tangible device and does not include a signal (e.g., an electromagnetic wave), and the term 'non-transitory storage medium' does not distinguish between a case where data is stored in a storage medium semi-permanently and a case where data is stored temporarily. For example, the 'non-transitory storage medium' may include a buffer in which data is temporarily stored.

According to an embodiment, methods according to various embodiments disclosed herein may be included in a computer program product and then provided. The computer program product may be traded as commodities between sellers and buyers. The computer program product may be distributed in the form of a machine-readable storage medium (e.g., a CD-ROM), or may be distributed online (e.g., downloaded or uploaded) through an application store or directly between two user devices (e.g., smart phones). In a case of online distribution, at least a portion of the computer program product (e.g., a downloadable app) may be temporarily stored in a machine-readable storage medium such as a manufacturer's server, an application store's server, or a memory of a relay server.

## Claims

1. An electronic device for determining an inspection area of a manufactured product, the electronic device comprising:
a memory storing one or more instructions; and
at least one processor (120) configured to execute the one or more instructions to:
obtain first input data corresponding to a manufactured product;
obtain model information of the manufactured product, based on the obtained first input data by recognizing an inspection object present in the first input data and identifying the model of the manufactured product from the recognized inspection object;
determine one or more first candidate inspection areas associated with the first input data by inputting the first input data and model information to an artificial neural network that is pre-trained and configured to output an inspection area in response to receiving an image as input;
perform inspections by identifying an inspection target in the one or more first candidate inspection areas associated with the first input data; and
determine final inspection areas from among the one or more first candidate inspection areas, based on an inspection result on the one or more first candidate inspection areas associated with the first input data.

2. The electronic device of claim 1, wherein the at least one processor (120) is further configured to identify a barcode or a Quick Response (QR) code from the first input data, and obtain the model information of the manufactured product, based on the identified barcode or QR code.

3. The electronic device of claim 1 or 2, wherein the inspections comprise at least one of a fastening inspection, a shaping inspection, and an appearance inspection.

4. The electronic device of any one of claims 1 to 3, wherein the first input data is any one of an image, a video, and a hyperspectral image.

5. The electronic device of any one of claims 1 to 4, wherein the at least one processor (120) is further configured to, perform the inspections based on a positional relationship between a plurality of points within the one or more first candidate inspection areas, based on the one or more first candidate inspection areas comprising at least one of a harness, a cable, or a connector, and perform the inspections based on presence or absence of the plurality of parts in the one or more first candidate inspection areas, and a positional relationship between the plurality of parts, based on the one or more first candidate inspection areas comprising a plurality of parts.

6. The electronic device of any one of claims 1 to 5, wherein the at least one processor (120) is further configured to, for each of the one or more first candidate inspection areas, exclude a corresponding candidate inspection area from the one or more first candidate inspection areas,
based on a first proportion having a number of times, as a numerator, that the inspection target is not detected and an inspection is therefore determined as infeasible, and
based on a number of inspections, as a denominator, being greater than or equal to a preset second proportion and a preset value,and
determine the one or more first candidate inspection areas as the final inspection areas.

7. The electronic device of any one of claims 1 to 6, wherein the at least one processor (120) is configured to obtain second input data for the model, determine one or more second candidate inspection areas by inputting each of the model information and the second input data to the artificial neural network, compare the second candidate inspection areas with the one or more first candidate inspection areas, based on an area, present only in the second candidate inspection areas, being detected a number of times greater than or equal to a preset number of times, add the area to the one or more first candidate inspection areas; and determine the final inspection areas from among the one or more first candidate inspection areas, based on results of inspection of the one or more first candidate inspection areas associated with the second input data.

8. The electronic device of any one of claims 1 to 7, wherein the at least one processor (120) is further configured to, based on a proportion of successful inspections for each first candidate inspection area being greater than or equal to a preset value, and the number of inspections being greater than or equal to a preset value, determine the one or more first candidate inspection areas as the final inspection areas.

9. The electronic device of any one of claims 1 to 8, wherein the at least one processor (120) is further configured to calculate a rotation angle of the first input data, based on a certain point or outline of the first input data, align the first input data based on using the calculated rotation angle, and obtain the one or more first candidate inspection areas by inputting the aligned first input data to the artificial neural network.

10. The electronic device of any one of claims 1 to 9, wherein the at least one processor (120) is further configured to determine the determined final inspection areas as manufacturing areas.

11. A computer-implemented method of determining an inspection area of a manufactured product, the method comprising:
obtaining a plurality of pieces of first input data corresponding to a plurality of manufactured products (S910);
obtaining model information of the plurality of manufactured products, based on the obtained plurality of pieces of first input data by recognizing an inspection object present in the first input data and identifying the model of the manufactured product from the recognized inspection object (S930);
inputting the plurality of pieces of first input data and the model information to an artificial neural network that is pre-trained to output an inspection area in response to receiving a video or an image as input; determining one or more first candidate inspection areas for corresponding first input data (S950);
performing inspections by identifying an inspection target in the one or more first candidate inspection areas of each piece of input data (S970); and
determining final inspection areas from among the one or more first candidate inspection areas, based on results of inspection of the one or more first candidate inspection areas associated with each piece of input data (S990).

12. The method of claim 11, wherein the performing of the inspections comprises, based on the one or more first candidate inspection area comprising at least one of a harness, a cable, or a connector, performing the inspections based on a positional relationship between one or more points within the one or more first candidate inspection area, and based on the one or more first candidate inspection areas comprising a plurality of parts, performing the inspections based on presence or absence of the plurality of parts in the first candidate inspection area, and a positional relationship between the plurality of parts.

13. The method of claim 11 or 12, wherein the determining of the final inspection areas comprises:
for each of the one or more first candidate inspection areas, excluding the corresponding candidate inspection area from the first candidate inspection areas,
based on a first proportion having a number of times, as a numerator, that the inspection target is not detected and an inspection is therefore determined as infeasible, and
based on a number of inspections, as a denominator, being greater than or equal to a preset second proportion and a preset value; and
determining the one or more first candidate inspection areas as the final inspection areas.

14. The method of any one of claims 11 to 13, further comprising:
obtaining a plurality of pieces of second input data for the models;
determining one or more second candidate inspection areas by inputting model information and the plurality of pieces of second input data to the artificial neural network; and
comparing the second candidate inspection areas with the first candidate inspection areas;
based on an area, present only in the second candidate inspection areas, being detected a number of times greater than or equal to a preset number of times, add the area to the first candidate inspection areas;
wherein the determining of the final inspection areas further comprises determining the final inspection areas from among the one or more first candidate inspection areas, based on results of inspection of the first candidate inspection areas associated with the plurality of pieces of second input data.

15. A non-transitory computer-readable recording medium having recorded thereon a program for causing a computer to execute the method of any one of claims 11 to 14.

## Patentansprüche

1. Elektronische Vorrichtung zum Bestimmen eines Prüfbereichs eines hergestellten Produkts, wobei die elektronische Vorrichtung Folgendes umfasst:
einen Speicher, der eine oder mehrere Anweisungen speichert; und
mindestens einen Prozessor (120), der dazu konfiguriert ist, die eine oder mehreren Anweisungen zu Folgendem auszuführen:
Erlangen erster Eingabedaten, die einem hergestellten Produkt entsprechen;
Erlangen von Modellinformationen des hergestellten Produkts basierend auf den erlangten ersten Eingabedaten durch Erkennen eines in den ersten Eingabedaten vorhandenen Prüfobjekts und Identifizieren des Modells des hergestellten Produkts aus dem erkannten Prüfobjekt;
Bestimmen eines oder mehrerer erster Kandidaten-Prüfbereiche, die den ersten Eingabedaten zugeordnet sind, durch Eingeben der ersten Eingabedaten und von Modellinformationen in ein künstliches neuronales Netz, das vortrainiert und dazu konfiguriert ist, einen Prüfbereich als Reaktion auf das Empfangen eines Bildes als Eingabe auszugeben;
Durchführen von Prüfungen durch Identifizieren eines Prüfziels in dem einen oder den mehreren ersten Kandidaten-Prüfbereichen, die den ersten Eingabedaten zugeordnet sind; und
basierend auf einem Prüfergebnis an dem einen oder den mehreren ersten Kandidaten-Prüfbereichen, die den ersten Eingabedaten zugeordnet sind, Bestimmen von Endprüfbereichen aus dem einen oder den mehreren ersten Kandidaten-Prüfbereichen.

2. Elektronische Vorrichtung nach Anspruch 1, wobei der mindestens eine Prozessor (120) ferner dazu konfiguriert ist, einen Barcode oder einen Quick-Response(QR)-Code aus den ersten Eingabedaten zu identifizieren und die Modellinformationen des hergestellten Produkts basierend auf dem identifizierten Barcode oder QR-Codes zu erlangen.

3. Elektronische Vorrichtung nach Anspruch 1 oder 2, wobei die Prüfungen mindestens eines von einer Befestigungsprüfung, einer Formgebungsprüfung und einer Erscheinungsbildprüfung umfassen.

4. Elektronische Vorrichtung nach einem der Ansprüche 1 bis 3, wobei die ersten Eingangsdaten eines von einem Bild, einem Video oder einem hyperspektralen Bild sind.

5. Elektronische Vorrichtung nach einem der Ansprüche 1 bis 4, wobei der mindestens eine Prozessor (120) ferner dazu konfiguriert ist, die Prüfungen basierend auf einer Positionsbeziehung zwischen einer Vielzahl von Punkten innerhalb des einen oder der mehreren ersten Kandidaten-Prüfbereiche, basierend darauf, dass der eine oder die mehreren ersten Kandidaten-Prüfbereiche mindestens eines von einem Kabelbaum, einem Kabel oder einem Verbinder umfassen, durchzuführen und die Prüfungen basierend auf dem Vorhandensein oder Nichtvorhandensein der Vielzahl von Teilen in dem einen oder den mehreren ersten Kandidaten-Prüfbereichen und einer Positionsbeziehung zwischen der Vielzahl von Teilen, basierend darauf, dass der eine oder die mehreren ersten Kandidaten-Prüfbereiche eine Vielzahl von Teilen umfassen, durchzuführen.

6. Elektronische Vorrichtung nach einem der Ansprüche 1 bis 5, wobei der mindestens eine Prozessor (120) ferner dazu konfiguriert ist, für jeden aus dem einen oder den mehreren ersten Kandidaten-Prüfbereichen einen entsprechenden Kandidaten-Prüfbereich aus dem einen oder den mehreren ersten Kandidaten-Prüfbereichen auszuschließen,
basierend darauf, dass ein erster Anteil eine Anzahl von Malen als Zähler, die das Prüfziel nicht erkannt wird und eine Prüfung daher als nicht machbar bestimmt wird, aufweist und
basierend darauf, dass eine Anzahl von Prüfungen als Nenner größer als oder gleich einem voreingestellten zweiten Anteil und einem voreingestellten Wert ist, und
den einen oder die mehreren ersten Kandidaten-Prüfbereiche als die Endprüfbereiche zu bestimmen.

7. Elektronische Vorrichtung nach einem der Ansprüche 1 bis 6, wobei der mindestens eine Prozessor (120) dazu konfiguriert ist, zweite Eingabedaten für das Modell zu erlangen, einen oder mehrere zweite Kandidaten-Prüfbereiche durch Eingeben jeder der Modellinformationen und der zweiten Eingabedaten in das künstliche neuronale Netz zu bestimmen, die zweiten Kandidaten-Prüfbereiche mit dem einen oder den mehreren ersten Kandidaten-Prüfbereichen zu vergleichen, basierend darauf, dass ein Bereich, der nur in den zweiten Kandidaten-Prüfbereichen vorhanden ist, eine Anzahl von Malen, die größer als oder gleich einer voreingestellten Anzahl von Malen ist, detektiert wird, den Bereich zu dem einen oder den mehreren ersten Kandidaten-Prüfbereichen hinzuzufügen; und basierend auf Prüfergebnissen des einen oder der mehreren ersten Kandidaten-Prüfbereiche, die den zweiten Eingabedaten zugeordnet sind, die Endprüfbereiche aus dem einen oder den mehreren ersten Kandidaten-Prüfbereichen zu bestimmen.

8. Elektronische Vorrichtung nach einem der Ansprüche 1 bis 7, wobei der mindestens eine Prozessor (120) ferner dazu konfiguriert ist, basierend darauf, dass ein Anteil erfolgreicher Prüfungen für jeden ersten Kandidaten-Prüfbereich größer als oder gleich einem voreingestellten Wert ist und die Anzahl von Prüfungen größer als oder gleich einem voreingestellten Wert ist, den einen oder die mehreren ersten Kandidaten-Prüfbereiche als die Endprüfbereiche zu bestimmen.

9. Elektronische Vorrichtung nach einem der Ansprüche 1 bis 8, wobei der mindestens eine Prozessor (120) ferner dazu konfiguriert ist, einen Drehwinkel der ersten Eingabedaten basierend auf einem gewissen Punkt oder Umriss der ersten Eingabedaten zu berechnen, die ersten Eingabedaten basierend auf der Verwendung des berechneten Drehwinkels auszurichten und den einen oder die mehreren ersten Kandidaten-Prüfbereiche durch Eingeben der ausgerichteten ersten Eingabedaten in das künstliche neuronale Netz zu erlangen.

10. Elektronische Vorrichtung nach einem der Ansprüche 1 bis 9, wobei der mindestens eine Prozessor (120) ferner dazu konfiguriert ist, die bestimmten Endprüfbereiche als Fertigungsbereiche zu bestimmen.

11. Computerimplementiertes Verfahren zum Bestimmen eines Prüfbereichs eines hergestellten Produkts, wobei das Verfahren Folgendes umfasst:
Erlangen einer Vielzahl von einzelnen ersten Eingabedaten, die einer Vielzahl von hergestellten Produkten entsprechen (S910);
Erlangen von Modellinformationen der Vielzahl von hergestellten Produkten basierend auf den erlangten einzelnen ersten Eingabedaten durch Erkennen eines in den ersten Eingabedaten vorhandenen Prüfobjekts und Identifizieren des Modells des hergestellten Produkts aus dem erkannten Prüfobjekt (S930);
Eingeben der Vielzahl von einzelnen ersten Eingabedaten und der Modellinformationen in ein künstliches neuronales Netz, das vortrainiert ist, um einen Prüfbereich als Reaktion auf das Empfangen eines Videos oder eines Bildes als Eingabe auszugeben; Bestimmen eines oder mehrerer erster Kandidaten-Prüfbereiche für entsprechende erste Eingabedaten (S950);
Durchführen von Prüfungen durch Identifizieren eines Prüfziels in dem einen oder den mehreren ersten Kandidaten-Prüfbereichen aller einzelnen Eingabedaten (S970); und
basierend auf Prüfergebnissen des einen oder der mehreren ersten Kandidaten-Prüfbereiche, die allen einzelnen Eingabedaten zugeordnet sind, Bestimmen von Endprüfbereichen aus dem einen oder den mehreren ersten Kandidaten-Prüfbereichen (S990).

12. Verfahren nach Anspruch 11, wobei das Durchführen der Prüfungen, basierend darauf, dass der eine oder die mehreren ersten Kandidaten-Prüfbereiche mindestens eines von einem Kabelbaum, einem Kabel oder einem Verbinder umfasst, Durchführen der Prüfungen basierend auf einer Positionsbeziehung zwischen einem oder mehreren Punkten innerhalb des einen oder der mehreren ersten Kandidaten-Prüfbereiche und basierend darauf, dass der eine oder die mehreren ersten Kandidaten-Prüfbereiche eine Vielzahl von Teilen umfassen, Durchführen der Prüfungen basierend auf dem Vorhandensein oder Nichtvorhandensein der Vielzahl von Teilen in dem ersten Kandidaten-Prüfbereich und einer Positionsbeziehung zwischen der Vielzahl von Teilen umfasst.

13. Verfahren nach Anspruch 11 oder 12, wobei das Bestimmen der Endprüfbereiche Folgendes umfasst:
für jeden aus dem einen oder den mehreren ersten Kandidaten-Prüfbereichen, Ausschließen des entsprechenden Kandidaten-Prüfbereichs aus den ersten Kandidaten-Prüfbereichen,
basierend darauf, dass ein erster Anteil eine Anzahl von Malen als Zähler, die das Prüfziel nicht erkannt wird und eine Prüfung daher als nicht machbar bestimmt wird, aufweist und
basierend darauf, dass eine Anzahl von Prüfungen als Nenner größer als oder gleich einem voreingestellten zweiten Anteil und einem voreingestellten Wert ist; und
Bestimmen des einen oder der mehreren ersten Kandidaten-Prüfbereiche als die Endprüfbereiche.

14. Verfahren nach einem der Ansprüche 11 bis 13, ferner umfassend:
Erlangen einer Vielzahl von einzelnen zweiten Eingabedaten für die Modelle;
Bestimmen eines oder mehrerer zweiter Kandidaten-Prüfbereiche durch Eingeben von Modellinformationen und der Vielzahl von einzelnen zweiten Eingabedaten in das künstliche neuronale Netz; und
Vergleichen der zweiten Kandidaten-Prüfbereiche mit den ersten Kandidaten-Prüfbereichen;
basierend darauf, dass ein Bereich, der nur in den zweiten Kandidaten-Prüfbereichen vorhanden ist, eine Anzahl von Malen, die größer als oder gleich einer voreingestellten Anzahl von Malen ist, detektiert wird, Hinzufügen des Bereichs zu den ersten Kandidaten-Prüfbereichen;
wobei das Bestimmen der Endprüfbereiche ferner Bestimmen der Endprüfbereiche aus dem einen oder den mehreren ersten Kandidaten-Prüfbereichen basierend auf Prüfergebnissen der ersten Kandidaten-Prüfbereiche, die der Vielzahl von einzelnen zweiten Eingabedaten zugeordnet sind, umfasst.

15. Nichtflüchtiges computerlesbares Aufzeichnungsmedium mit einem darauf aufgezeichneten Programm zum Bewirken, dass ein Computer das Verfahren nach einem der Ansprüche 11 bis 14 ausführt.

## Revendications

1. Dispositif électronique pour déterminer une zone d'inspection d'un produit fabriqué, le dispositif électronique comprenant :
une mémoire stockant une ou plusieurs instructions ; et
au moins un processeur (120) configuré pour exécuter la ou les instructions pour :
obtenir des premières données d'entrée correspondant à un produit fabriqué ;
obtenir des informations de modèle du produit fabriqué, sur la base des premières données d'entrée obtenues en reconnaissant un objet d'inspection présent dans les premières données d'entrée et en identifiant le modèle du produit fabriqué à partir de l'objet d'inspection reconnu ;
déterminer une ou plusieurs premières zones d'inspection candidates associées aux premières données d'entrée en entrant les premières données d'entrée et des informations de modèle dans un réseau neuronal artificiel qui est préentraîné et configuré pour délivrer en sortie une zone d'inspection en réponse à la réception d'une image en tant qu'entrée ;
réaliser des inspections en identifiant une cible d'inspection dans la ou les premières zones d'inspection candidates associées aux premières données d'entrée ; et
déterminer des zones d'inspection finale parmi la ou les premières zones d'inspection candidates, sur la base d'un résultat d'inspection sur la ou les premières zones d'inspection candidates associées aux premières données d'entrée.

2. Dispositif électronique de la revendication 1, ledit au moins un processeur (120) étant en outre configuré pour identifier un code à barres ou un code de réponse rapide (QR) à partir des premières données d'entrée, et obtenir les informations de modèle du produit fabriqué, sur la base du code à barres ou du code QR identifiés.

3. Dispositif électronique de la revendication 1 ou 2, lesdites inspections comprenant au moins l'une d'une inspection de fixation, d'une inspection de mise en forme et d'une inspection d'apparence.

4. Dispositif électronique de l'une quelconque des revendications 1 à 3, lesdites premières données d'entrée étant l'une quelconque d'une image, d'une vidéo et d'une image hyperspectrale.

5. Dispositif électronique de l'une quelconque des revendications 1 à 4, ledit au moins un processeur (120) étant en outre configuré pour réaliser les inspections sur la base d'une relation de position entre une pluralité de points à l'intérieur de la ou des premières zones d'inspection candidates, sur la base que la ou des premières zones d'inspection candidates comprennent au moins l'un d'un faisceau, d'un câble ou d'un connecteur, et réaliser
les inspections sur la base de la présence ou de l'absence de la pluralité de pièces dans la ou les premières zones d'inspection candidates, et une relation de position entre la pluralité de pièces, sur la base de la ou des premières zones d'inspection candidates comprenant une pluralité de pièces.

6. Dispositif électronique de l'une quelconque des revendications 1 à 5, ledit au moins un processeur (120) étant en outre configuré pour, pour chacune de la ou des premières zones d'inspection candidates, exclure une zone d'inspection candidate correspondante de la ou des premières zones d'inspection candidates,
sur la base qu'une première proportion possède un nombre de fois, en tant que numérateur, que la cible d'inspection n'est pas détectée et qu'une inspection est donc déterminée comme infaisable, et
sur la base d'un nombre d'inspections, en tant que dénominateur, qui est supérieur ou égal à une seconde proportion prédéfinie et à une valeur prédéfinie, et
déterminer la ou les premières zones d'inspection candidates en tant que zones d'inspection finale.

7. Dispositif électronique de l'une quelconque des revendications 1 à 6, ledit au moins un processeur (120) étant configuré pour obtenir des secondes données d'entrée pour le modèle, déterminer une ou plusieurs secondes zones d'inspection candidates en entrant chacune des informations de modèle et des secondes données d'entrée dans le réseau neuronal artificiel, comparer les secondes zones d'inspection candidates à la ou aux premières zones d'inspection candidates, sur la base qu'une zone, présente uniquement dans les secondes zones d'inspection candidates, est détectée un nombre de fois supérieur ou égal à un nombre prédéfini de fois, ajouter la zone à la ou aux premières zones d'inspection candidates ; et déterminer les zones d'inspection finale parmi la ou les premières zones d'inspection candidates, sur la base des résultats d'inspection de la ou des premières zones d'inspection candidates associées aux secondes données d'entrée.

8. Dispositif électronique de l'une quelconque des revendications 1 à 7, ledit au moins un processeur (120) étant en outre configuré pour, sur la base qu'une proportion d'inspections réussies pour chaque première zone d'inspection candidate est supérieure ou égale à une valeur prédéfinie, et que le nombre d'inspections est supérieur ou égal à une valeur prédéfinie, déterminer la ou les premières zones d'inspection candidates en tant que zones d'inspection finale.

9. Dispositif électronique de l'une quelconque des revendications 1 à 8, ledit au moins un processeur (120) étant en outre configuré pour calculer un angle de rotation des premières données d'entrée, sur la base d'un certain point ou contour des premières données d'entrée, aligner les premières données d'entrée sur la base de l'utilisation de l'angle de rotation calculé, et obtenir la ou les premières zones d'inspection candidates en entrant les premières données d'entrée alignées dans le réseau neuronal artificiel.

10. Dispositif électronique de l'une quelconque des revendications 1 à 9, ledit au moins un processeur (120) est en outre configuré pour déterminer les zones d'inspection finale déterminées en tant que zones de fabrication.

11. Procédé mise en œuvre par ordinateur de détermination d'une zone d'inspection d'un produit fabriqué, le procédé comprenant :
l'obtention d'une pluralité d'éléments de premières données d'entrée correspondant à une pluralité de produits fabriqués (S910) ;
l'obtention d'informations de modèle de la pluralité de produits fabriqués, sur la base de la pluralité obtenue d'éléments de premières données d'entrée en reconnaissant un objet d'inspection présent dans les premières données d'entrée et en identifiant le modèle du produit fabriqué à partir de l'objet d'inspection reconnu (S930) ;
l'entrée de la pluralité d'éléments de premières données d'entrée et des informations de modèle dans un réseau neuronal artificiel qui est préentraîné pour délivrer en sortie une zone d'inspection en réponse à la réception d'une vidéo ou d'une image en tant qu'entrée ; la détermination d'une ou de plusieurs premières zones d'inspection candidates pour des premières données d'entrée correspondantes (S950) ;
la réalisation d'inspections en identifiant une cible d'inspection dans la ou les premières zones d'inspection candidates de chaque élément de données d'entrée (S970) ; et
la détermination de zones d'inspection finale parmi la ou les premières zones d'inspection candidates, sur la base des résultats d'inspection de la ou des premières zones d'inspection candidates associées à chaque élément de données d'entrée (S990).

12. Procédé de la revendication 11, ladite réalisation des inspections comprenant, sur la base que la ou les premières zones d'inspection candidates comprennent au moins l'un d'un faisceau, d'un câble ou d'un connecteur, la réalisation des inspections sur la base d'une relation de position entre un ou plusieurs points à l'intérieur de la ou des premières zones d'inspection candidates, et sur la base que la ou les premières zones d'inspection candidates comprennent une pluralité de pièces, la réalisation des inspections sur la base de la présence ou de l'absence de la pluralité de pièces dans la première zone d'inspection candidate, et une relation de position entre la pluralité de pièces.

13. Procédé de la revendication 11 ou 12, ladite détermination des zones d'inspection finale comprenant :
pour chacune de la ou des premières zones d'inspection candidates, l'exclusion de la zone d'inspection candidate correspondante des premières zones d'inspection candidates,
sur la base qu'une première proportion possède un nombre de fois, en tant que numérateur, que la cible d'inspection n'est pas détectée et qu'une inspection est donc déterminée comme infaisable, et
sur la base qu'un nombre d'inspections, en tant que dénominateur, est supérieur ou égal à une seconde proportion prédéfinie et à une valeur prédéfinie ; et
la détermination de la ou des premières zones d'inspection candidates en tant que zones d'inspection finale.

14. Procédé de l'une quelconque des revendications **11** à 13, comprenant en outre :
l'obtention d'une pluralité d'éléments de secondes données d'entrée pour les modèles ;
la détermination d'une ou de plusieurs secondes zones d'inspection candidates en entrant des informations de modèle et la pluralité d'éléments de secondes données d'entrée dans le réseau neuronal artificiel ; et
la comparaison des secondes zones d'inspection candidates avec les premières zones d'inspection candidates ;
sur la base qu'une zone, présente uniquement dans les secondes zones d'inspection candidates, est détectée un nombre de fois supérieur ou égal à un nombre prédéfini de fois, ajouter la zone aux premières zones d'inspection candidates ;
ladite détermination des zones d'inspection finale comprenant en outre la détermination des zones d'inspection finale parmi la ou les premières zones d'inspection candidates, sur la base des résultats d'inspection des premières zones d'inspection candidates associées à la pluralité d'éléments de secondes données d'entrée.

15. Support d'enregistrement non transitoire lisible par ordinateur sur lequel est enregistré un programme destiné à amener un ordinateur à exécuter le procédé de l'une quelconque des revendications 11 à 14.
